(19) Europäisches Patentamt / European Patent Office / Office européen des brevets

(11) **EP 4 285 504 B1**

(12) **EUROPEAN PATENT SPECIFICATION**

(45) Date of publication and mention
of the grant of the patent:
**24.12.2025  Bulletin 2025/52**

(21) Application number: **21847692.7**

(22) Date of filing: **24.12.2021**

(51) International Patent Classification (IPC):
**H04B 7/0426** (2017.01)     **H04B 7/06** (2006.01)

(52) Cooperative Patent Classification (CPC):
**H04B 7/0426; H04B 7/0608**

(86) International application number:
**PCT/EP2021/087646**

(87) International publication number:
**WO 2022/161727 (04.08.2022 Gazette 2022/31)**

(54) **PROCESSING DATA FOR TRANSMISSION OVER A COMMUNICATION SYSTEM**

**DATENVERARBEITUNG FÜR DAS SENDEN ÜBER EIN KOMMUNIKATIONSSYSTEM**

**TRAITEMENT DE DONNÉES POUR TRANSMISSION VIA UN SYSTÈME DE COMMUNICATION**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2021  GB 202101202**

(43) Date of publication of application:
**06.12.2023  Bulletin 2023/49**

(73) Proprietor: **British Telecommunications public
limited company**
**London E1 8EE (GB)**

(72) Inventors:
• **AL RAWI, Anas**
**London EC4V 5BT (GB)**
• **ZHANG, Yangyishi**
**London EC4V 5BT (GB)**

(74) Representative: **British Telecommunications
public limited company**
**Intellectual Property Department**
**9th Floor**
**One Braham**
**Braham Street**
**London E1 8EE (GB)**

(56) References cited:
**US-A1- 2012 177 140     US-A1- 2012 177 140**

**Description**

Technical Field

The present invention relates to processing data for transmission over a communication system.

Background

There are various approaches for communicating data from a transmitter to a receiver and vice versa. MIMO (Multiple-Input-Multiple-Output) is a type of radio communication that exploits multipath propagation and spatial diversity to increase the capacity and/or performance of the network. It is a mature subject in both industry and academia and is an essential element of various wireless communication standards.

A MIMO network could be, for example, a cellular network in which a base station has multiple antennas for communication with mobile stations within its cell. In known MIMO systems, precoding is performed on signals prior to transmission in order to improve signal quality by addressing interference (through interference cancellation and/or beamforming).

US2012/177140 discloses a MIMO transmission system comprising a base station and mobile station.

It is desirable to improve the energy efficiency and/or capacity of data transmission using a communication system, for example a MIMO network.

Summary

According to a first aspect of the present disclosure, there is provided a method of processing data for transmission over a communication system comprising:

a transmitter comprising a plurality of transmitter antennas; and
a plurality of receiver antennas, each of the plurality of receiver antennas connected to the transmitter via a respective communication channel, the method comprising:

precoding the data prior to transmission to generate precoded data,
wherein precoding the data comprises precoding the data to reduce an amplitude of a data element of the data, for receipt by a receiver antenna of the plurality of receiver antennas, to a predefined numerical value, so as to reduce an amplitude of the precoded data received at the receiver antenna
the method further comprising identifying the receiver antenna based on an activity level of the receiver antenna, wherein identifying the receiver antenna comprises identifying that the activity level of the receiver antenna satisfies an inactivity condition indicative of relative inactivity.

According to a second aspect of the present disclosure, there is provided: a system for processing data for transmission over a communication system comprising:

a transmitter comprising a plurality of transmitter antennas; and
a plurality of receiver antennas, each of the plurality of receiver antennas connected to the transmitter via a respective communication channel, the system comprising:

a precoder adapted to precode the data prior to transmission to generate precoded data,
wherein precoding the data comprises precoding the data to reduce an amplitude of a data element of the data, for receipt by a receiver antenna of the plurality of receiver antennas, to a predefined numerical value, so as to reduce an amplitude of the precoded data received at the receiver antenna

the system further comprising an identifier adapted to identify the receiver antenna based on an activity level of the receiver antenna, wherein identifying the receiver antenna comprises identifying that the activity level of the receiver antenna satisfies an inactivity condition indicative of relative inactivity.

Brief Description of the Drawings

For a better understanding of the present disclosure, reference will now be made by way of example only to the accompany drawings, in which:

Figure 1 is a schematic view of a network according to examples;
Figure 2 is a schematic view of a transmitter adapted to perform a method in accordance with examples; and
Figure 3 is a schematic view of a network according to further examples.

Detailed Description

Apparatus and methods in accordance with the present disclosure are described herein with reference to particular examples. The invention is not, however, limited to such examples.

Examples herein relate to processing of data for transmission over a communication system with a transmitter having a plurality of transmitter antennas. The communication system also includes a plurality of receiver antennas, each connected to the transmitter via a respective communication channel. The data to be transmitted is precoded prior to transmission to generate precoded data. Precoding supports multi-stream transmission in multi-antenna wireless communication systems, such as MIMO systems, so that the precoded data is weighted appropriately to optimise the data received at the receiver antennas.

Certain receiver antenna(s) in a given communication system may be idle, inactive or otherwise less active than other receiver antenna(s). Nevertheless, due to various effects such as interference between signals sent to the other receiver antenna(s) or spatial leakage of signals, an idle receiver antenna may nevertheless receive a proportion of these other signals. In other words, energy may be dispersed or may otherwise leak or scatter to the idle receiver antenna, rather than being concentrated in the receiver antenna to which it is desired to send a given signal.

In examples herein, precoding the data to be transmitted to the receiver antennas comprises reducing an amplitude of a data element of the data, for receipt by a receiver antenna of the plurality of receiver antennas, to a predefined numerical value (such as zero). This reduces the amplitude of the precoded data received at the receiver antenna. The energy received by the receiver antenna can hence be actively reduced compared to that received by other receiver antennas. In this way, energy dispersion towards a particular receiver antenna can be reduced, so that a greater proportion of energy is incident on other receiver antenna(s), which may be considered to be target antenna(s). This can improve the capacity of a communication link between the transmitter and the receiver antennas. Precoding the data in this manner can be performed straightforwardly, reducing computational complexity and hence resource consumption for performing the precoding.

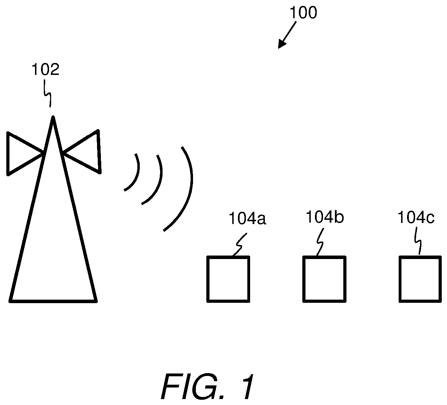

Figure 1 shows a cellular network in accordance with examples. The network is shown generally at 100. In particular there is a cellular base station 102 and mobile stations 104a-104c. Mobile stations 104a-104c are located within the cell of the base station 102 and communicate with the base station 102.

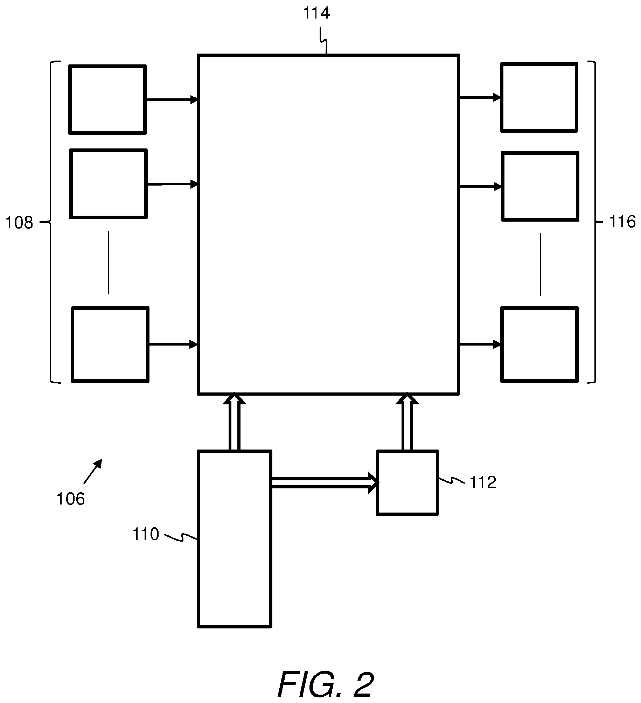

Figure 2 shows a transmitter 106 in accordance with examples, which in this example is a MIMIO transmitter 106 for transmitting data comprising a plurality of MIMO signals. The transmitter 106 is located within the base station 102 of Figure 1. The transmitter 106 comprises an array of N symbol encoders and mappers 108. Three components of the array are shown for illustration. The symbol encoders encode data, such as users' bit stream data, using a given coding scheme e.g. convolutional, LDPC or turbo. This is done to combat errors arising from the background noise of the channel. The mappers map subsets of the encoded data into constellation points with distinct phase and amplitude. The length of the subsets is determined via the modulation order and can be optimised via bit loading.

The transmitter 106 comprises a MIMO channel entity 110. The MIMO channel entity 110 performs a channel estimation. It does so by transmitting training signals (not shown) on the channels and measuring the effect the channel has on the training signals. From this a channel matrix $H$ is determined, which is indicative of channel state information associated with the communication channels between the transmitter 106 and receiver antennas. $H$ comprises channel coefficients. An example of $H$ is for a communication system comprising a transmitter 106 with three transmitter antennas, and three receiver antennas:

$$H = \begin{bmatrix} h_{11} & h_{12} & h_{13} \\ h_{21} & h_{22} & h_{23} \\ h_{31} & h_{32} & h_{33} \end{bmatrix}$$

The elements $h_{ij}$ are channel coefficients, and are a measure of the interference experienced on channel $i$ as a result of the signal transmitted on channel $j$. It is to be appreciated, though, that a communication system may generally comprise $N$ receiver antennas and $M$ transmitter antennas, with a channel matrix $H$ with $N$ rows and $M$ columns. As the skilled person will appreciate, each sub-channel (corresponding to a frequency band of signals to be transmitted) has its own channel matrix. Sub-channels can be of various widths (e.g. of the order of 1 Hertz (HZ) upwards), and typically have widths calculated by the ratio of the total system bandwidth to a power of two factor with an even exponent ($2^K$), which determines the length of a discrete Fourier transform used for demodulation of the signals at the receiver and the number of sub-channels (which may be referred to as sub-carriers in wireless systems).

The MIMO channel entity 110 measures the channel coefficients, constructs the channel matrix *H*, and sends *H* to a MIMO management unit 112. The MIMO management unit 112 obtains a matrix for use in precoding data to be sent from the transmitter 106.

The matrix obtained by the MIMO management unit 112 is for example a diagonal matrix, *B*. Each diagonal element of the diagonal matrix corresponds to a respective one of a plurality of data elements of the data to be transmitted. The other elements of the diagonal matrix are zero. The MIMO management unit 112 obtains suitable values for each of the diagonal elements of the diagonal matrix so as to suitably modify data element(s) of the data during precoding of the data. For example, a diagonal element corresponding to at least one data element for which the amplitude is to be reduced may have a predefined numerical value corresponding to the predefined numerical value to which the amplitude is to be reduced to. For example, where the amplitude of a particular data element is to be reduced to zero, the corresponding diagonal element of the diagonal matrix may have the predefined numerical value of zero.

In some examples, at least one of the diagonal elements has a first predefined numerical value, and at least one other diagonal element has a second predefined numerical value, greater than the first predefined numerical value. In this way, the amplitude of the data element(s) corresponding to the diagonal element(s) with the first predefined numerical value can be reduced relative to the amplitude of the data element(s) corresponding to the diagonal element(s) with the second predefined numerical value. In one case, the second predefined numerical value is one, so as to maximise the amplitude of the other data element(s) (for which the amplitude is to be maintained, rather than reduced).

To obtain suitable values for the diagonal elements of the diagonal matrix, the MIMO management unit 112 may receive an indication of at least one receiver antenna for which an amplitude of the precoded data received is to be reduced. Based on the indication, the MIMO management unit 112 may identify at least one diagonal element of the diagonal matrix that corresponds to that least one receiver antenna, respectively, and set the numerical value of the at least one diagonal element to an appropriate value. For example, where the amplitude of the precoded data received at the at least one receiver antenna is to be reduced to zero, the MIMO management unit 112 may set the at least one diagonal element to a value of zero.

The at least one receiver antenna may be identified in various ways. For example, a particular receiver antenna may be identified based on an activity level of the receiver antenna. An activity level for example corresponds to the extent to which a receiver antenna is engaged in active communication with a transmitter antenna. For example, a device which is powered-up but in standby mode may be considered to be in an idle state, as it is not engaged in active communication with a transmitter antenna. In some examples, if the activity level of the receiver antenna satisfies an inactivity condition indicative of relative inactivity (e.g. indicating that the receiver antenna is idle, inactive or relatively less active than other receiver antennas), it may be determined that the amplitude of the precoded data received by the receiver antenna can be reduced without unduly affecting transmission of the data. The activity level of a particular receiver antenna may be determined based on an indicative or predicted bit rate required by a user of a particular receiver antenna. For example, if a predicted bit rate associated with a particular receiver antenna is relatively low, the receiver antenna may be considered inactive. In other cases, the activity level may be determined based on signal to noise ratio received from a particular receiver antenna, e.g. indicative that the particular receiver is an idle or otherwise inactive state.

The at least one receiver antenna may additionally or alternatively be identified based on a priority ranking of the at least one receiver antenna. For example, if there is a first receiver antenna and a second receiver antenna and the priority ranking indicates that the first receiver antenna has a lower priority than the second receiver antenna, then the first receiver antenna may be identified as a receiver antenna for which an amplitude of the precoded data received is to be reduced. It is to be appreciated that the priority ranking of the receiver antennas may be based on various characteristics of the receiver antennas, e.g. based on an activity level, as discussed above, based on an importance of an intended usage of a particular receiver antenna (and/or the data received by the particular receiver antenna, and so forth.

In some examples, the at least one receiver antenna is additionally or alternatively identified based on channel state information associated with the communication channels of the communication system. The channel state information (which for example comprises channel coefficients, discussed above), indicates properties of the communication channels, indicating how a signal propagates via the communication channels. The channel state information accounts for various effects that affect the propagation of signals, such as scattering, fading, and signal decay. The channel state information hence provides a measure of the effect of the communication channel on the propagation of signals via that communication channel. For example, a signal transmitted to a first receiver antenna may leak or otherwise disperse spatially so that a portion of the signal is incident on a second receiver antenna that is located nearby the first receiver antenna. Using the channel state information, receiver antenna(s) which are liable to receive dispersed energy intended for another receiver antenna (in the absence of the precoding described herein) can be identified. For example, the channel coefficients associated with a second receiver antenna in the absence of the precoding techniques herein may sum to a smaller value that the channel coefficients associated with a first receiver antenna to which a particular signal is to be sent. This may indicate that the second receiver antenna is a lower priority or otherwise less relevant receiver antenna than the first receiver antenna, and that the amplitude of signals received at the second receiver antenna can be reduced without degrading the signals that are intended to be transmitted.

EP 4 285 504 B1

In these examples, the receiver antennas can be ranked based on the channel state information, e.g. based on a sum of channel coefficients of the channel state information. For example, the receiver antennas can be ranked in order of this sum, from the lowest to the highest. The at least one receiver antenna for which the amplitude of precoded data received is to be reduced can then be identified based on a rank of the at least one receiver antenna. For example, the N-lowest ranked receiver antennas (with the N-lowest sums of channel coefficients, where N is an integer) can be identified as those for which the amplitude of the precoded data received is to be reduced, as these receiver antenna(s) are more likely to be idle or inactive. In one case, a particular receiver antenna is identified in response to identifying that the rank of the receiver antenna is less than or equal to a threshold rank (such that the sum of channel coefficients associated with the receiver antenna is less than a sum of channel coefficients associated with a further receiver with a rank greater than the threshold rank).

Identifying a receiver antenna with the lowest sum of channel coefficients may be expressed mathematically as:

$$\tilde{J} = \operatorname{argmin}\left[\sum_i h_{ij}, \forall j\right]$$

where $\tilde{J}$ is the identified column index for MIMO sub-space reduction, and also refers to which receiver will be excluded, $h_{ij}$ are the channel coefficients, $i$ are the receiver antennas and $j$ are the transmitter antennas.

Some examples involve iteratively identifying respective receiver antennas for which an amplitude of a corresponding data element of the data, for receipt by the respective receiver antenna, is to be reduced. For example, the receiver antennas may be iteratively identified based on the channel state information. In such cases, a first receiver antenna with the lowest sum of channel coefficients may first be identified. The channel state information may then be recalculated to account for a reduction of an amplitude of a first data element of the data, for receipt by the first receiver antenna, to a predefined numerical value (as this reduces the amplitude of the precoded data received at the receiver antenna, which in turn affects the channel state information). The sum of the channel coefficients can then be recalculated for the other receiver antennas (i.e. with the first receiver antenna excluded), which may then be re-ranked. A second receiver antenna with the lowest sum of the channel coefficients in the re-ranked listed may then be identified. The channel state information may then again be recalculated to account for a reduction of an amplitude of a second data element of the data, for receipt by the second receiver antenna, to the predefined numerical value. This process may be performed repeatedly, in an iterative manner, until a transmission condition is satisfied. For example, the transmission condition may be satisfied if the sum of the channel coefficients for each of the receiver antennas in the ranked list meets or exceeds a threshold sum (which may e.g. indicate that the receiver antennas are active antennas) or if a certain number of receiver antennas have been identified.

In the example of Figure 2, the MIMO management unit 112 identifies the receiver antenna(s) for which the amplitude of the precoded data is to be reduced. However, in other examples, these receiver antenna(s) may be identified by a different component, which may send an indication of the identified receiver antenna(s) to the MIMO management unit 112 for use in obtaining the diagonal matrix.

In one example, in which a communication system comprises a transmitter 106 with three transmitter antennas, and three receiver antennas, the diagonal matrix includes diagonal elements which are assigned a value of one for two (active) receiver antennas, and one (inactive) receiver antenna. The diagonal matrix, **B**, in this particular example can be expressed as:

$$\boldsymbol{B} = \begin{bmatrix} 1 & 0 & 0 \\ 0 & 0 & 0 \\ 0 & 0 & 1 \end{bmatrix}$$

The second diagonal element of the diagonal matrix (on the second row) in this example is set to a predefined numerical value of zero, so as to reduce a corresponding data element of data to be precoded to zero. In this case, the data element to be reduced corresponds to a second receiver antenna of the three receiver antennas (as each row of the diagonal matrix corresponds to a different respective receiver antenna), so as to reduce the precoded data received by the second receiver antenna. If, however, the data element to be reduced to zero corresponded to a first receiver antenna, the first diagonal element of the diagonal matrix (on the first row) would instead have a value of zero. Similarly, if the data element to be reduced to zero corresponded to a third receiver antenna, the third diagonal element of the diagonal matrix (on the third row) would instead have a value of zero. In some cases, two data elements are reduced to zero, in which case two of the diagonal elements (corresponding to the respective data elements) have a value of zero.

The diagonal matrix, **B,** is then transmitted from the MIMO management unit 112 to a MIMO precoder unit 114. The MIMO precoder unit 114 precodes the data to be transmitted, so as to reduce an amplitude of a respective data element of the data for receipt by a respective receiver antenna (identified by the MIMO management unit 112 as being receiver antenna(s) for which the amplitude of the precoded data received is to be reduced). By reducing the amplitude of the data element(s), the precoded data received by the corresponding receiver antenna(s) is in turn correspondingly reduced. For example, if the amplitude of the data element(s) is reduced to zero, the precoded data received by the corresponding receiver antenna(s) is also reduced to zero. In examples such as this, the precoding techniques described herein may be considered to correspond to zero leakage precoding, as it can reduce leakage of energy to particular receiver antennas to zero. In other cases, though, reduction of the amplitude of the data element(s) to zero may reduce the precoded data received by the corresponding receiver antenna(s) to a smaller, but non-zero, value (e.g. a negligibly small value), for example if the channel state information does not fully account for the properties of the communication channels, i.e. imperfect. In such cases, there may in some cases be a small amount of energy leakage incident on the particular receiver antenna(s), which is nevertheless less than would otherwise be incident in the absence of the precoding described herein.

In this example, reducing the amplitude of the data element(s) as performed by the MIMO precoder unit 114 comprises a matrix multiplication of the data, *x*, by a precoder matrix, *P*, which depends on the diagonal matrix, *B*. In one example, the precoder matrix, *P*, is expressable as:

$$P = BH^{-1}diag(HB)$$

where *B* represents the diagonal matrix, *H* represents a channel matrix indicative of channel state information associated with the communication channels, and *diag* indicates the application of a diagonalisation operation. The data, *x*, in this case corresponds to the signals received from the symbol encoder and mapper array 108.

In the above-discussed example, with *H* and *B* as set out above, the expression *HB* (which may be considered to represent a modified communications channel) may be expressed as:

$$HB = \begin{bmatrix} h_{11} & h_{12} & h_{13} \\ h_{21} & h_{22} & h_{23} \\ h_{31} & h_{32} & h_{33} \end{bmatrix} \begin{bmatrix} 1 & 0 & 0 \\ 0 & 0 & 0 \\ 0 & 0 & 1 \end{bmatrix} = \begin{bmatrix} h_{11} & 0 & h_{13} \\ h_{21} & 0 & h_{23} \\ h_{31} & 0 & h_{33} \end{bmatrix}$$

This may be diagonalised as follows:

$$diag(HB) = \begin{bmatrix} h_{11} & 0 & 0 \\ 0 & 0 & 0 \\ 0 & 0 & h_{33} \end{bmatrix}$$

The use of the diagonal matrix hence acts on the precoder matrix so as to reduce the numerical values of at least one column of the precoder matrix. In this case, the second column (corresponding to the second receiver antenna) is reduced to zero, so that the remainder of the energy is allocated to the desired receiver antennas (the first and third antennas in this case). For example, if it is desired to allocate the entire precoded signal to a particular receiver antenna, the data elements of the diagonal matrix corresponding to each other receiver antenna could be set to zero, so as to force the column vectors of the precoder matrix to zero for each column corresponding to each other receiver antenna.

It is to be appreciated that *diag(HB)* may be further optimised, to further reduce energy leakage to particular receiver antennas. The optimisation may further target sub-spaces with relatively similar energy levels to simplify the normalisation factors to relatively similar values. If sub-spaces are significantly different then the normalisation will have to account for large and small signals which can reduce the efficacy of precoding.

The inverse of the channel matrix may be computed using existing techniques, and then combined with *B* and *HB* as set out above, to obtain *P*. The precoded data $\hat{x}$ may then be calculated as:

$$\hat{x} = Px = BH^{-1}diag(HB)x$$

This expression for $\hat{x}$ excludes the effect of noise. However, it is to be appreciated that the precoding performed by the MIMO precoder unit 114 may additionally involve further processing to account for the effect of noise (e.g. in the form of an additional noise term in the expression for $\hat{x}$).

The resulting value for $\hat{x}$ in this example has a non-zero numerical value in the first and third data elements, but a zero numerical value in the second data element, e.g.:

$$\widehat{x} = \begin{bmatrix} x_1 \\ 0 \\ x_3 \end{bmatrix}$$

where $x_1$ and $x_3$ represent non-zero numerical values of $\hat{x}$ (the precoded data to be sent to the receiver antennas).

The precoded data for transmission, $\hat{x}$, which may be referred to as a transmission signal or transmission signals are then passed to an array of Inverse Discrete Fourier Transform components/Analogue Front End 116 and are transmitted from transmitter antennas to the receiver antennas of the mobile stations 104a-104c. This is conventional in MIMO systems and so will not be described in detail here. The receiver antennas receive the signals and process them in a manner which is conventional and so will not be described in detail here.

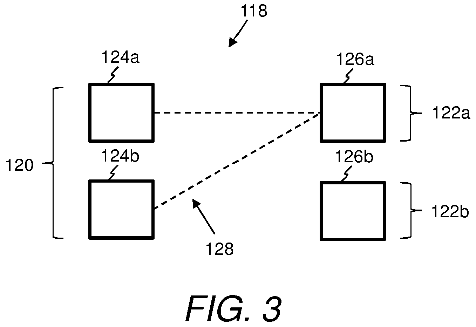

An example to illustrate the above principles is shown schematically in Figure 3. Figure 3 shows a communications system 118, which includes a transmitter 120, and two receivers 122a, 122b. Each of the receivers 122a, 122b is for example a different respective user equipment (UE). The transmitter 120 includes two transmitter antennas 124a, 124b, and each of the receivers 122a, 122b includes one respective receiver antenna. In this example, the amplitude of the precoded data 128 (indicated by a dashed line in Figure 3) received by a second receiver antenna 126b (which in this case is an idle antenna) has been reduced to zero. In this way, all of the precoded data 128 is focussed on the first receiver antenna 126a (which in this case is a target antenna).

Figure 3 is merely an example, though, and in further examples, there may be a single receiver that includes a plurality of receiver antennas, or there may be a plurality of receivers, each of which includes one or more receiver antennas.

Further examples are envisaged. In the example of Figure 2, the MIMO management unit 112 transmits the diagonal matrix to the MIMO precoder unit 114, and the MIMO precoder unit 114 computes a precoder matrix, for use in the precoding, based on the diagonal matrix. However, in other examples, the MIMO management unit 112 computes a precoder matrix, e.g. using a diagonal matrix as described above, and transmits the precoder matrix to the MIMO precoder unit 114, for the MIMO precoder unit 114 to use in precoding the data to be transmitted.

In the numerical examples given above, to illustrate the principles herein, the amplitude of the data elements is reduced to zero. In other examples, though, the amplitude of the data elements may be reduced to a numerical value other than zero (such as a small, non-zero value, which is e.g. notably less than the amplitude of other data elements, such as at least an order of magnitude smaller than the amplitude of other data elements). In such cases, a similar diagonal matrix may be used as set out above, for example, to obtain precoded data $\hat{x}$ as described above, and then the data element(s) that were reduced to zero may be replaced with a small, non-zero value. This may be used for example to provide an indication to the receiver antenna that the precoding methods described herein have been applied. The B matrix in such a scenario becomes a non-binary matrix allowing multiple data streams weighted according to service priority and data demand to sustain a target level of performance across multiple services or users.

For the transmission of data with a relatively low signal to noise ratio (SNR), a given group of channels may have different useful bandwidth sizes depending on the propagation conditions and the losses. In this scenario, a particular channel may be unable to provide the maximum number of beams (where each beam corresponds to a transmitter-receiver pair) using existing precoding techniques. In such cases, inactive sub-carriers are sometimes deactivated, resulting in a smaller MIMO group, and a less lossy normalisation factor. For instance, the normalisation process of network consisting of two users, one at significantly larger distance from the signal source than the other. In this scenario, the normalisation will be either biased towards one terminal but not the other or averaged in which the average value is far from the ideal values for both terminals. Therefore, it is preferred to cluster terminals which are relatively similar in channel conditions to avoid excessive penalties in normalising multiple dissimilar channel conditions. Optimised normalisation can increase the SNR of the active sub-carriers. This approach can be further improved by the use of the precoding techniques described herein, to reduce leakage into inactive receiver antenna(s).

It is to be appreciated that the methods herein may be used in conjunction with power allocation techniques, to appropriately adjust the amplitude of respective data signals to be transmitted. In such cases, power allocation is for example performed before the data is precoded (e.g. by a power allocation unit, which processes the data before the data is precoded by a precoder unit such as the precoder unit 114 of Figure 2).

Each feature disclosed herein, and (where appropriate) as part of the claims and drawings may be provided independently or in any appropriate combination.

In general, it is noted herein that while the above describes examples, there are several variations and modifications which may be made to the described examples without departing from the scope of the appended claims. One skilled in the art will recognise modifications to the described examples.

Any reference numerals appearing in the claims are for illustration only and shall not limit the scope of the claims. As used throughout, the word 'or' can be interpreted in the exclusive and/or inclusive sense, unless otherwise specified.

**Claims**

1. A method of processing data for transmission over a communication system comprising:

   a transmitter comprising a plurality of transmitter antennas; and
   a plurality of receiver antennas, each of the plurality of receiver antennas connected to the transmitter via a respective communication channel, the method comprising:

   precoding the data prior to transmission to generate precoded data,
   wherein precoding the data comprises precoding the data to reduce an amplitude of a data element of the data, for receipt by a receiver antenna of the plurality of receiver antennas, to a predefined numerical value, so as to reduce an amplitude of the precoded data received at the receiver antenna
   the method further comprising identifying the receiver antenna based on an activity level of the receiver antenna, wherein identifying the receiver antenna comprises identifying that the activity level of the receiver antenna satisfies an inactivity condition indicative of relative inactivity.

2. The method according to claim 1, wherein the predefined numerical value is zero.

3. The method according to claim 4, wherein precoding the data to reduce the amplitude of the data element to zero reduces the amplitude of the precoded data received at the receiver antenna to zero.

4. The method according to any one of claims 1 to 3, wherein reducing the amplitude of the data element comprises processing the data using a diagonal matrix, each of at least one other diagonal element of the diagonal matrix corresponding to a respective one of a plurality of data elements of the data, the plurality of data elements comprising the data element, the diagonal element corresponding to the data element having the predefined numerical value.

5. The method according to claim 4, wherein the predefined numerical value is a first predefined numerical value, and each other diagonal element of the diagonal matrix, which correspond to a respective one of the plurality of data elements other than the data element, has a second predefined numerical value, greater than the first predefined numerical value.

6. The method according to claim 5, wherein the second predefined numerical value is one.

7. The method according to any one of claims 4 to 6, wherein reducing the amplitude of the data element comprises a matrix multiplication of the data, *x*, by a precoder matrix, *P,* which depends on the diagonal matrix.

8. The method according to claim 7, wherein the precoder matrix, P, is expressable as:

$$P = BH^{-1}diag(HB)$$

   where B represents the diagonal matrix, H represents a channel matrix indicative of channel state information associated with the communication channels, and *diag* indicates the application of a diagonalisation operation.

9. The method according to any one of claims 1 to 8, wherein the data comprises a plurality of multiple-input multiple-output (MIMO) signals.

10. The method according to any one of claims 1 to 9, wherein the receiver antenna is a first receiver antenna, the plurality of receiver antennas comprises a second receiver antenna, and precoding the data comprises precoding the data based on a priority ranking of the first receiver antenna relative to the second receiver antenna, the priority ranking indicating that the first receiver antenna has a lower priority than the second receiver antenna.

11. The method according to any one of claims 1 to 10, comprising identifying the receiver antenna based on channel state information associated with the communication channels.

12. The method according to claim 11, wherein identifying the receiver antenna based on the channel state information comprises:

using the channel state information to rank the plurality of receiver antennas; and
identifying the receiver antenna based on a rank of the receiver antenna.

13. The method according to claim 12, wherein the channel state information comprises channel coefficients associated with the communication channels, and identifying the receiver antenna comprises identifying the receiver antenna in response to identifying that the rank of the receiver antenna is less than or equal to a threshold rank, wherein the rank is indicative that a sum of channel coefficients associated with the receiver antenna is less than a sum of channel coefficients associated with a further receiver with a rank greater than the threshold rank.

14. The method according to any one of claims 11 to 13, comprising iteratively identifying respective receiver antennas for which an amplitude of a corresponding data element of the data, for receipt by the respective receiver antenna, is to be reduced to the predefined numerical value, based on the channel state information.

15. The method according to any one of claims 1 to 14, further comprising transmitting, by the transmitter, the precoded data using the communication channels.

16. A system for processing data for transmission over a communication system comprising:

a transmitter comprising a plurality of transmitter antennas; and
a plurality of receiver antennas, each of the plurality of receiver antennas connected to the transmitter via a respective communication channel, the system comprising:

a precoder adapted to precode the data prior to transmission to generate precoded data,
wherein precoding the data comprises precoding the data to reduce an amplitude of a data element of the data, for receipt by a receiver antenna of the plurality of receiver antennas, to a predefined numerical value, so as to reduce an amplitude of the precoded data received at the receiver antenna
the system further comprising an identifier adapted to identify the receiver antenna based on an activity level of the receiver antenna, wherein identifying the receiver antenna comprises identifying that the activity level of the receiver antenna satisfies an inactivity condition indicative of relative inactivity.

17. The system according to claim 16, wherein the predefined numerical value is zero.

18. A communication network comprising the system according to claim 16 or claim 17.

**Patentansprüche**

1. Verfahren zum Verarbeiten von Daten zur Übertragung über ein Kommunikationssystem, umfassend:

einen Sender, der eine Vielzahl von Senderantennen umfasst; und
eine Vielzahl von Empfängerantennen, wobei jede der Vielzahl von Empfängerantennen über einen jeweiligen Kommunikationskanal mit dem Sender verbunden ist, wobei das Verfahren umfasst:

Vorcodieren der Daten vor der Übertragung, um vorcodierte Daten zu erzeugen,
wobei das Vorcodieren der Daten das Vorcodieren der Daten, um eine Amplitude eines Datenelements der Daten zu reduzieren, für den Empfang durch eine Empfängerantenne der Vielzahl von Empfängerantennen auf einen vordefinierten numerischen Wert umfasst, sodass eine Amplitude der vorcodierten Daten reduziert wird, die an der Empfängerantenne empfangen werden,
wobei das Verfahren ferner Identifizieren der Empfängerantenne basierend auf einem Aktivitätsniveau der Empfängerantenne umfasst, wobei das Identifizieren der Empfängerantenne das Identifizieren umfasst, dass das Aktivitätsniveau der Empfängerantenne eine Inaktivitätsbedingung erfüllt, die relative Inaktivität angibt.

2. Verfahren nach Anspruch 1, wobei der vordefinierte numerische Wert null beträgt.

3. Verfahren nach Anspruch 4, wobei das Vorcodieren der Daten, um die Amplitude des Datenelements auf null zu reduzieren, die Amplitude der vorcodierten Daten, die an der Empfängerantenne empfangen werden, auf null reduziert.

4. Verfahren nach einem der Ansprüche 1 bis 3, wobei das Reduzieren der Amplitude des Datenelements das Verarbeiten der Daten unter Verwendung einer Diagonalmatrix umfasst, wobei jedes mindestens eines anderen Diagonalelements der Diagonalmatrix einem jeweiligen einer Vielzahl von Datenelementen der Daten entspricht, wobei die Vielzahl von Datenelementen das Datenelement umfasst, wobei das Diagonalelement dem Datenelement mit dem vordefinierten numerischen Wert entspricht.

5. Verfahren nach Anspruch 4, wobei der vordefinierte numerische Wert ein erster vordefinierter numerischer Wert ist, und jedes andere Diagonalelement der Diagonalmatrix, das einem jeweiligen der Vielzahl von Datenelementen außer dem Datenelement entspricht, einen zweiten vordefinierten numerischen Wert aufweist, der größer als der erste vordefinierte numerische Wert ist.

6. Verfahren nach Anspruch 5, wobei der zweite vordefinierte numerische Wert eins beträgt.

7. Verfahren nach einem der Ansprüche 4 bis 6, wobei das Reduzieren der Amplitude des Datenelements eine Matrixmultiplikation der Daten, x, mit einer Vorcodierermatrix, P, die von der Diagonalmatrix abhängt, umfasst.

8. Verfahren nach Anspruch 7, wobei die Vorcodierermatrix, P, ausgedrückt werden kann als:

$$P = BH^{-1}\mathrm{diag}(HB)$$

wobei B die Diagonalmatrix repräsentiert, H eine Kanalmatrix repräsentiert, die Kanalzustandsinformationen angibt, die mit den Kommunikationskanälen assoziiert sind, und diag die Anwendung einer Diagonalisierungsoperation angibt.

9. Verfahren nach einem der Ansprüche 1 bis 8, wobei die Daten eine Vielzahl von Mehrfacheingang-Mehrfachausgang(MIMO)-Signalen umfassen.

10. Verfahren nach einem der Ansprüche 1 bis 9, wobei die Empfängerantenne eine erste Empfängerantenne ist, wobei die Vielzahl von Empfängerantennen eine zweite Empfängerantenne umfasst, und das Vorcodieren der Daten das Vorcodieren der Daten basierend auf einer Prioritätseinstufung der ersten Empfängerantenne relativ zu der zweiten Empfängerantenne umfasst, wobei die Prioritätseinstufung angibt, dass die erste Empfängerantenne eine niedrigere Priorität aufweist als die zweite Empfängerantenne.

11. Verfahren nach einem der Ansprüche 1 bis 10, umfassend Identifizieren der Empfängerantenne basierend auf Kanalzustandsinformationen, die mit den Kommunikationskanälen assoziiert sind.

12. Verfahren nach Anspruch 11, wobei das Identifizieren der Empfängerantenne basierend auf den Kanalzustandsinformationen umfasst:

Verwenden der Kanalzustandsinformationen, um die Vielzahl von Empfängerantennen einzustufen; und
Identifizieren der Empfängerantenne basierend auf einem Rang der Empfängerantenne.

13. Verfahren nach Anspruch 12, wobei die Kanalzustandsinformationen Kanalkoeffizienten umfassen, die mit den Kommunikationskanälen assoziiert sind, und das Identifizieren der Empfängerantenne das Identifizieren der Empfängerantenne als Reaktion auf das Identifizieren umfasst, dass der Rang der Empfängerantenne kleiner oder gleich einem Schwellenrang ist, wobei der Rang angibt, dass eine Summe von Kanalkoeffizienten, die mit der Empfängerantenne assoziiert sind, kleiner als eine Summe von Kanalkoeffizienten ist, die mit einem weiteren Empfänger mit einem Rang größer als der Schwellenrang assoziiert sind.

14. Verfahren nach einem der Ansprüche 11 bis 13, umfassend iteratives Identifizieren jeweiliger Empfängerantennen, für die eine Amplitude eines entsprechenden Datenelements der Daten, für den Empfang durch die jeweilige Empfängerantenne, auf den vordefinierten numerischen Wert reduziert werden soll, basierend auf den Kanalzustandsinformationen.

15. Verfahren nach einem der Ansprüche 1 bis 14, ferner umfassend Übertragen, durch den Sender, der vorcodierten Daten unter Verwendung der Kommunikationskanäle.

**16.** System zum Verarbeiten von Daten zur Übertragung über ein Kommunikationssystem, umfassend:

einen Sender, der eine Vielzahl von Senderantennen umfasst; und
eine Vielzahl von Empfängerantennen, wobei jede der Vielzahl von Empfängerantennen über einen jeweiligen Kommunikationskanal mit dem Sender verbunden ist, wobei das System umfasst:

einen Vorcodierer, der eingerichtet ist zum Vorcodieren der Daten vor der Übertragung, um vorcodierte Daten zu erzeugen,
wobei das Vorcodieren der Daten das Vorcodieren der Daten, um eine Amplitude eines Datenelements der Daten zu reduzieren, für den Empfang durch eine Empfängerantenne der Vielzahl von Empfängerantennen auf einen vordefinierten numerischen Wert umfasst, sodass eine Amplitude der vorcodierten Daten reduziert wird, die an der Empfängerantenne empfangen werden,
wobei das System ferner einen Identifizierer umfasst, der eingerichtet ist zum Identifizieren der Empfängerantenne basierend auf einem Aktivitätsniveau der Empfängerantenne, wobei das Identifizieren der Empfängerantenne das Identifizieren umfasst, dass das Aktivitätsniveau der Empfängerantenne eine Inaktivitätsbedingung erfüllt, die relative Inaktivität angibt.

**17.** System nach Anspruch 16, wobei der vordefinierte numerische Wert null beträgt.

**18.** Kommunikationsnetzwerk, das das System nach Anspruch 16 oder Anspruch 17 umfasst.

**Revendications**

**1.** Procédé de traitement de données pour une transmission sur un système de communication comprenant ; un émetteur comprenant une pluralité d'antennes émettrices ; et
plusieurs antennes de réception, chacune de la pluralité d'antennes de réception raccordée à l'émetteur par un canal de communication respectif, le procédé comprenant :

précoder les données avant transmission pour générer des données précodées,
dans lequel le précodage des données comprend un précodage des données pour réduire une amplitude d'un élément de données des données, pour une réception par une antenne de réception de la pluralité d'antennes de réception, à une valeur numérique prédéfinie, de manière à réduire une amplitude des données précodées reçues au niveau de l'antenne de réception
le procédé comprend en outre l'identification de l'antenne réceptrice sur la base d'un niveau d'activité de l'antenne réceptrice, l'identification de l'antenne réceptrice comprenant l'identification du fait que le niveau d'activité de l'antenne réceptrice satisfait à une condition d'inactivité indicative d'une inactivité relative.

**2.** Procédé selon la revendication 1, dans lequel la valeur numérique prédéfinie est zéro.

**3.** Procédé selon la revendication 4, dans lequel le pré-codage des données pour réduire l'amplitude de l'élément de données à zéro réduit l'amplitude des données pré-codées reçues au niveau de l'antenne réceptrice à zéro.

**4.** Procédé selon l'une quelconque des revendications 1 à 3, dans lequel la réduction de l'amplitude de l'élément de données comprend le traitement des données en utilisant une matrice diagonale, chacun d'au moins un autre élément diagonal de la matrice diagonale correspondant à un élément respectif d'une pluralité d'éléments de données des données, la pluralité d'éléments de données comprenant l'élément de données, l'élément diagonal correspondant à l'élément de données ayant la valeur numérique prédéfinie.

**5.** Procédé selon la revendication 4, dans lequel la valeur numérique prédéfinie est une première valeur numérique prédéfinie, et chaque autre élément diagonal de la matrice diagonale, qui correspond à un élément respectif de la pluralité d'éléments de données autres que l'élément de données, a une deuxième valeur numérique prédéfinie, supérieure à la première valeur numérique prédéfinie.

**6.** Procédé selon la revendication 5, dans lequel la deuxième valeur numérique prédéfinie est un.

**7.** Procédé selon l'une quelconque des revendications 4 à 6, dans lequel la réduction de l'amplitude de l'élément de données comprend une multiplication matricielle des données, x, par une matrice de précodeur, P, qui dépend de la matrice diagonale.

8. Procédé selon la revendication 7, dans lequel la matrice de précodeur, P, est exprimable comme :

$$P = BH^{-1}\text{diag(HB)}$$

Où B représente la matrice diagonale, H représente une matrice de canal indiquant des informations d'état de canal associées aux canaux de communication, et DIAG indique l'application d'une opération de diagonalisation.

9. Procédé selon l'une quelconque des revendications 1 à 8, dans lequel les données comprennent une pluralité de signaux à entrées multiples et sorties multiples (MIMO) .

10. Procédé selon l'une quelconque des revendications 1 à 9, dans lequel l'antenne réceptrice est une première antenne réceptrice, la pluralité d'antennes réceptrices comprend une deuxième antenne réceptrice, et le précodage des données comprend le précodage des données sur la base d'un classement de priorité de la première antenne réceptrice par rapport à la deuxième antenne réceptrice, le classement de priorité indiquant que la première antenne réceptrice a une priorité inférieure à celle de la deuxième antenne réceptrice.

11. Procédé selon l'une quelconque des revendications 1 à 10, comprenant l'identification de l'antenne réceptrice sur la base d'informations d'état de canal associées aux canaux de communication.

12. Procédé selon la revendication 11, dans lequel l'identification de l'antenne de réception sur la base des informations d'état de canal comprend :

utiliser les informations d'état de canal pour classer la pluralité d'antennes de réception ; et
identification de l'antenne réceptrice à partir d'un rang de l'antenne réceptrice.

13. Procédé selon la revendication 12, dans lequel les informations d'état de canal comprennent des coefficients de canal associés aux canaux de communication, et l'identification de l'antenne réceptrice comprend l'identification de l'antenne réceptrice en réponse à l'identification que le rang de l'antenne réceptrice est inférieur ou égal à un rang seuil, le rang indiquant qu'une somme de coefficients de canal associés à l'antenne réceptrice est inférieure à une somme de coefficients de canal associés à un autre récepteur ayant un rang supérieur au rang seuil.

14. Procédé selon l'une quelconque des revendications 11 à 13, comprenant l'identification itérative d'antennes de réception respectives pour lesquelles une amplitude d'un élément de données correspondant des données, pour réception par l'antenne de réception respective, doit être réduite à la valeur numérique prédéfinie, sur la base des informations d'état de canal.

15. Procédé selon l'une quelconque des revendications 1 à 14, comprenant en outre l'émission, par l'émetteur, des données pré-codées en utilisant les canaux de communication.

16. Système de traitement de données pour une transmission sur un système de communication comprenant :

un émetteur comprenant une pluralité d'antennes émettrices ; et
plusieurs antennes de réception, chacune de la pluralité d'antennes de réception raccordée à l'émetteur par un canal de communication respectif, le système comprenant :

un précodeur adapté pour pré-coder les données avant la transmission afin de générer des données pré-codées,
dans lequel le précodage des données comprend un précodage des données pour réduire une amplitude d'un élément de données des données, pour une réception par une antenne de réception de la pluralité d'antennes de réception, à une valeur numérique prédéfinie, de manière à réduire une amplitude des données précodées reçues au niveau de l'antenne de réception
le système comprend en outre un identificateur conçu pour identifier l'antenne réceptrice sur la base d'un niveau d'activité de l'antenne réceptrice, l'identification de l'antenne réceptrice comprenant l'identification du fait que le niveau d'activité de l'antenne réceptrice satisfait à une condition d'inactivité indicative d'une inactivité relative.

**17.** Système selon la revendication 16, dans lequel la valeur numérique prédéfinie est zéro.

**18.** Réseau de communication comprenant le système selon la revendication 16 ou la revendication 17.

FIG. 1

*FIG. 2*

FIG. 3

**REFERENCES CITED IN THE DESCRIPTION**

**Patent documents cited in the description**

- US 2012177140 A